# EUROPEAN PATENT APPLICATION

(11) **EP 4 644 866 A1**
(43) Date of publication of application: **05.11.2025**
(21) Application number: 24763231.8
(22) Date of filing: 29.02.2024
(51) Int. Cl.: G01N 21/25, B01J 13/00, A24F 40/51, G01J 3/46

(54) **COLOR TESTING CALIBRATION METHOD AND AEROSOL GENERATION APPARATUS**

(30) Priority: 02.03.2023 CN 202310237705
(71) Applicant: Shenzhen First Union Technology Co., Ltd., Shenzhen, Guangdong 518000 (CN)
(72) Inventor: YU, Peixia, Shenzhen, Guangdong 518000 (CN); HU, Ruilong, Shenzhen, Guangdong 518000 (CN); XU, Zhongli, Shenzhen, Guangdong 518000 (CN); LI, Yonghai, Shenzhen, Guangdong 518000 (CN)
(74) Representative: Ran, Handong
(86) International application number: PCT/CN2024/079405
(87) International publication number: WO 2024/179551

(57) **Abstract**

The embodiments of the present application relate to the technical field of aerosol generation apparatuses. Disclosed are a color testing calibration method and an aerosol generation apparatus. The method comprises: acquiring a no-load signal of an aerosol generation apparatus, then controlling a color testing apparatus to perform a color test, so as to obtain a new background color value; according to the new background color value and the current background color value, calibrating the current color threshold interval, so as to obtain a new color threshold interval; and storing the new color threshold interval and the new background color value. That is, along with the use of an aerosol generation apparatus, the current background color value and the current color threshold interval are re-calibrated, a new color threshold interval and a new background color value, which are obtained by means of calibration, are used as reference values for color determination, such that the reference values are adapted to a smudge and aging of a color testing apparatus. By means of the present application, fine errors such as small dirt and brightness attenuation can be corrected in a timely manner, color testing is more accurate, and the anti-dirt effect is effectively achieved.

## Description

### CROSS-REFERENCE TO RELATED APPLICATIONS

The present application claims the benefit of priority to Chinese Patent Application No. 202310237705.4, filed with the China National Intellectual Property Administration on March 2, 2023 and entitled "CALIBRATION METHOD FOR COLOR DETECTION AND AEROSOL GENERATION APPARATUS", which is incorporated in its entirety herein by reference.

### TECHNICAL FIELD

Embodiments of the present application relate to the field of aerosol generation apparatuses, and particularly relate to a calibration method for color detection, and an aerosol generation apparatus.

### BACKGROUND

An aerosol generation apparatus heats and bakes an aerosol formation product by a heater, so as to generate an aerosol to be used by a user. Generally, the aerosol formation product is inserted into a cavity of the aerosol generation apparatus, and the heater heats at least a portion of the aerosol formation product received in the cavity, such that the aerosol is generated.

In order to simplify an operation by the user, a color detection apparatus is generally arranged in the cavity or around the cavity of the existing aerosol generation apparatus, so as to check an insertion state of the aerosol formation product or recognize aerosol formation products having different flavors, etc. The aerosol generation apparatus is automatically controlled based on these detection results. Thus, a relatively high level of intelligence is achieved. However, in the color detection apparatus, a lens of a light source for emitting light and a lens of a color sensor for receiving reflected light are prone to be smudged or aged, causing a color detection error.

### SUMMARY

Accordingly, some embodiments of the present application provide a calibration method for color detection. The method is applied to an aerosol generation apparatus including a color detection apparatus, and can calibrate, based on a smudge and/or aging of a lens of the color detection apparatus, a reference value for determining a color such that the color detection can be more accurate.

In a first aspect, some embodiments of the present application provide a calibration method for color detection. The method is applied to an aerosol generation apparatus including a color detection apparatus. The method includes:
acquiring a no-load signal of the aerosol generation apparatus, controlling the color detection apparatus to perform the color detection, and obtaining a new background color value;
calibrating a current color threshold interval according to the new background color value and a current background color value, and obtaining a new color threshold interval; and
storing the new color threshold interval and the new background color value.

In some embodiments, the calibrating a current color threshold interval according to the new background color value and a current background color value, and obtaining a new color threshold interval include:
determining a deviation between the new background color value and the current background color value; and
adjusting the current color threshold interval according to the deviation, and obtaining the new color threshold interval.

In some embodiments, the adjusting the current color threshold interval according to the deviation, and obtaining the new color threshold interval include:
performing an expansion on the current color threshold interval according to the deviation, and obtaining the new color threshold interval.

In some embodiments, the performing an expansion on the current color threshold interval according to the deviation, and obtaining the new color threshold interval include:
multiplying an absolute value of the deviation by a predetermined first coefficient, adding the product to an upper limit of the current color threshold interval, and obtaining the new color threshold interval; and/or
subtracting a product of an absolute value of the deviation and a predetermined second coefficient from a lower limit of the current color threshold interval, and obtaining the new color threshold interval.

In some embodiments, the performing an expansion on the current color threshold interval according to the deviation, and obtaining the new color threshold interval include:
multiplying an absolute value of the deviation by a predetermined first coefficient, adding the product to an upper limit of the current color threshold interval, multiplying the absolute value of the deviation by a predetermined third coefficient, adding the product to a lower limit of the current color threshold interval, and obtaining the new color threshold interval, where the third coefficient is less than the first coefficient.

In some embodiments, the adjusting the current color threshold interval, and obtaining the new color threshold interval include:
performing a movement on the current color threshold interval according to the deviation, and obtaining the new color threshold interval.

In some embodiments, the performing a movement on the current color threshold interval according to the deviation, and obtaining the new color threshold interval include:
subtracting a product of an absolute value of the deviation and a predetermined fourth coefficient from an upper limit of the current color threshold interval, subtracting a product of the absolute value of the deviation and the fourth coefficient from a lower limit of the current color threshold interval, and obtaining the new color threshold interval.

In some embodiments, the method further includes:
giving, in a case that an absolute value of the deviation is greater than or equal to a first threshold, a reminding signal for cleaning a lens of the color detection apparatus.

In some embodiments, the current background color value is hue, saturation, and value (HSV) data in an HSV color model.

Before the calibrating a current color threshold interval according to the new background color value and a current background color value, and obtaining a new color threshold interval, the method further includes:
converting the new background color value into HSV data in an HSV color model.

In some embodiments, the method further includes:
determining an insertion state of an aerosol formation product according to the new color interval threshold, the new background color value, and a color value obtained through detection by the color detection apparatus; and
controlling an operation of a heater of the aerosol generation apparatus according to the insertion state of the aerosol formation product.

In some embodiments, the determining an insertion state of an aerosol formation product according to the new color interval threshold, the new background color value, and a color value obtained through detection by the color detection apparatus includes:
determining, in a case that a difference between the color value obtained through detection by the color detection apparatus and the new background color value falls within a new color interval threshold corresponding to a label color, that the aerosol formation product is inserted in place, where the label color is a color of a label provided on the aerosol formation product.

The controlling an operation of a heater of the aerosol generation apparatus according to the insertion state of the aerosol formation product includes:
controlling, in a case that the aerosol formation product is inserted in place, the heater to perform heating.

In some embodiments, the determining an insertion state of an aerosol formation product according to the new color interval threshold, the new background color value, and a color value obtained through detection by the color detection apparatus includes:
determining, in a case that a difference between the color value obtained through detection by the color detection apparatus and the new background color value falls within a new color interval threshold corresponding to a body color, that the aerosol formation product is not inserted in place, where the body color is a color of a body of the aerosol formation product.

The controlling an operation of a heater of the aerosol generation apparatus according to the insertion state of the aerosol formation product includes:
controlling, in a case that the aerosol formation product is not inserted in place, the heater to stop performing heating.

In some embodiments, the method further includes:
determining a type of an aerosol formation product according to the new color interval threshold, the new background color value, and a color value obtained through detection by the color detection apparatus;
determining corresponding temperature configuration information according to the type of the aerosol formation product; and
controlling, according to the temperature configuration information, electric power supplied to a heater of the aerosol generation apparatus.

In some embodiments, the determining a type of an aerosol formation product according to the new color interval threshold, the new background color value, and a color value obtained through detection by the color detection apparatus includes:
determining, in a case that a difference between the color value obtained through detection by the color detection apparatus and the new background color value falls within a new color interval threshold corresponding to a target label color, that the type of the aerosol formation product is a type corresponding to the target label color.

In a second aspect, some embodiments of the present application provide an aerosol generation apparatus. The aerosol generation apparatus includes:
a housing provided with an opening;
a cavity structured to receive or remove an aerosol formation product through the opening;
a heater configured to heat at least a portion of the aerosol formation product received in the cavity, so as to generate an aerosol;
a color detection apparatus configured to emit light into the cavity and detect reflection of the light, so as to obtain a color value through detection; and
a control circuit connected to the heater and the color detection apparatus and configured to perform the method in the first aspect.

The embodiments of the present application have beneficial effects as follows: different from the prior art, the calibration method for color detection provided in an embodiment of the present application is applied to an aerosol generation apparatus including a color detection apparatus. The method includes: acquiring a no-load signal of the aerosol generation apparatus, controlling the color detection apparatus to perform the color detection, and obtaining a new background color value; calibrating a current color threshold interval according to the new background color value and a current background color value, and obtaining a new color threshold interval; and storing the new color threshold interval and the new background color value as reference values after calibration and for the color detection. In the embodiment, as an aerosol generation apparatus is used, a current background color value and a current color threshold interval are recalibrated, a new color threshold interval and a new background color value that are obtained through calibration are taken as reference values for determining a color such that the reference values can be adapted to a smudge and aging of a color detection apparatus. Fine errors caused by a tiny smudge and brightness decay, etc. can be corrected in time, and the color detection can be more accurate.

### BRIEF DESCRIPTION OF THE DRAWINGS

One or more embodiments are exemplarily described by using pictures in the corresponding accompanying drawings. These exemplary descriptions do not constitute a limitation on the embodiments. Elements in the accompanying drawings that have the same reference numerals are denoted as similar elements. Unless otherwise particularly stated, the figures in the accompanying drawings do not constitute a limitation on a scale.
FIG. 1 is a schematic diagram of an aerosol generation apparatus and an aerosol formation product according to some embodiments of the present application;
FIG. 2 is a schematic diagram of an aerosol generation apparatus according to some embodiments of the present application;
FIG. 3 is a schematic diagram of an aerosol formation product according to some embodiments of the present application;
FIG. 4 is a schematic diagram of an aerosol generation apparatus and an aerosol formation product according to some embodiments of the present application;
FIG. 5 is a schematic diagram of light propagation of a color detection apparatus according to some embodiments of the present application;
FIG. 6 is a schematic flowchart of a calibration method for color detection according to some embodiments of the present application;
FIG. 7 is a schematic flowchart of a calibration method for color detection according to some embodiments of the present application; and
FIG. 8 is a schematic flowchart of a calibration method for color detection according to some embodiments of the present application.

### DETAILED DESCRIPTION

The present application is described in detail below in combination with particular embodiments. The following embodiments will help a person skilled in the art further understand the present application, but do not limit the present application in any form. It should be noted that a person of ordinary skill in the art can make several variations and improvements without departing from the conception of the present application. These variations and improvements all fall within the scope of protection of the present application.

In order to make the objectives, technical solutions, and advantages of the present application clearer, the present application is described in further detail in combination with the accompanying drawings and the embodiments. It should be understood that the particular embodiments described herein are only used for explaining the present application, but are not used for limiting the present application.

It should be noted that if no conflict exists, the features in the embodiments of the present application can be combined with one another, and all combinations fall within the scope of protection of the present application. In addition, although functional modules are divided in a schematic diagram of the apparatus, and a logic sequence is shown in a flowchart, in some situations, the shown or described steps may be performed according to module division different from that in the apparatus, or in a sequence different from that in the flowchart. In addition, the words such as "first", "second", and "third" used herein do not limit data and an execution order, and only distinguish same items or similar items having basically same functions and effects.

Unless otherwise defined, the meanings of all technical terms and scientific terms used in the description are the same as those generally understood by a person skilled in the technical field to which the present application belongs. The terms used in the description of the present application are only intended to describe objectives of the particular implementations, but are not used for limiting the present application. The term "and/or" used in the description includes any or all combinations of one or more related listed items.

In addition, the technical features involved in the implementations of the present application that are described below can be combined with one another as long as no conflict is constituted between one another.

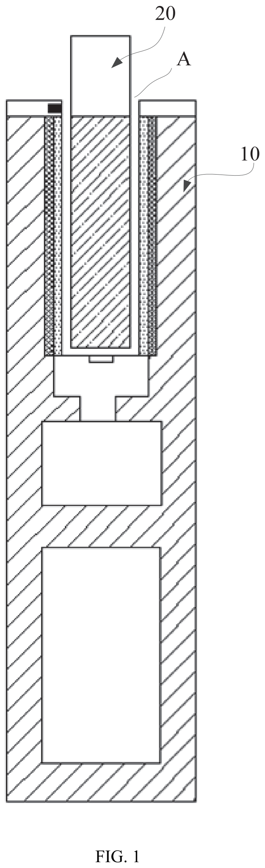

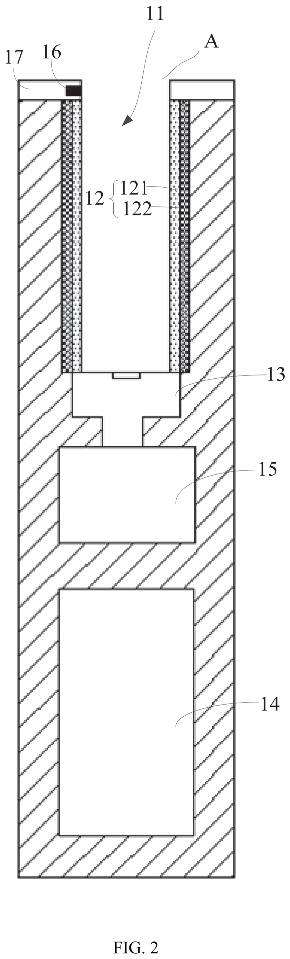

FIG. 1 and FIG. 2 show an aerosol generation apparatus 10 provided in some embodiments of the present application. The aerosol generation apparatus includes: a cavity 11, a heater 12, a power supply 14, a control circuit 15, and a color detection apparatus 16. The control circuit 15 is electrically connected to the power supply 14, the heater 12, and the color detection apparatus 16.

The cavity 11 is configured to receive or remove an aerosol formation product 20. The aerosol formation product 20 can be inserted into or pulled out of the cavity 11 through an opening A of the aerosol generation apparatus 10.

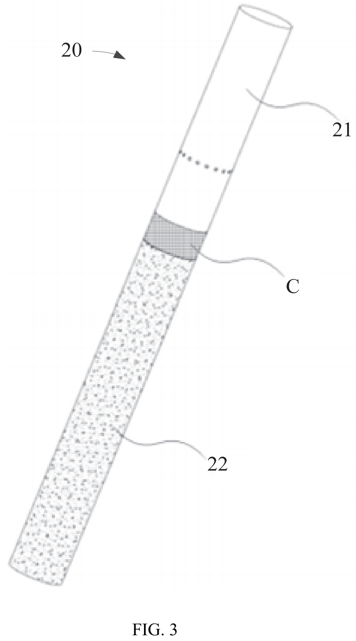

As shown in FIG. 3, in some embodiments, the aerosol formation product 20 includes a filter 21 and a body 22. The body 22 includes an aerosol formation substrate. The aerosol formation substrate is a substrate that can release a volatile compound that can form an aerosol. The volatile compound can be released by heating the aerosol formation substrate. The aerosol formation substrate may be an aerosol formation substrate in a solid state. Alternatively, the aerosol formation substrate may include a solid component and a liquid component.

In some embodiments, the aerosol formation substrate may include a tobacco-containing material that includes a volatile tobacco aroma compound that is released from the substrate during heating. Alternatively, the aerosol formation substrate may include a non-tobacco material. The aerosol formation substrate may further include an aerosol formation substance. Instances of suitable aerosol formation substances are glycerol and propylene glycol.

The aerosol generated by heating the body 22 is delivered to a user by the filter 21. The filter 21 may be a cellulose acetate filter. An aroma may be provided by spraying a flavoring liquid by the filter 21. Alternatively, separated fiber coated with a flavoring liquid is inserted into the filter, such that a lingering flavor provided for the user is improved. The filter 21 may be further provided with a spherical or cylindrical capsule. The capsule may contain content of the flavoring substance.

FIG. 3 only shows components of the aerosol generation product 20 related to the embodiment. Correspondingly, a person skilled in the art related to the embodiment should understand that the aerosol generation product 20 may further include common components other than the components shown in FIG. 3. For example, a cooling section for cooling the aerosol generated by heating the body 22 may be included such that a user can suck the aerosol cooled to a suitable temperature.

An outer surface of the filter 21 at an interface with the body 22 has a label C. A color of the label C may be a single color such as a red color, a blue color, or a green color, or may be a mixed color. The color of the label C may denote a type (not limited to this type) of a different aerosol generation product 20. For example, a red color denotes a mint-flavored aerosol generation product, a blue color denotes a coffee-flavored aerosol generation product, and a green color denotes a mango-flavored aerosol generation product. The color of the label C is different from a color of the outer surface of the body such that detection and recognition by the color detection apparatus can be facilitated.

The heater 12 is configured to heat the aerosol formation product 20 to generate an aerosol for suction.

The heater 12 includes a tubular base body 121 extending in an axial direction of the cavity 11 and surrounding the cavity 11, and an electrical heating element 122 arranged on an outer surface of the base body 121. In some embodiments, the electrical heating element 122 is a resistive heating line, such as an electrically conductive trajectory, a heating mesh, or a heating wire, arranged on the base body 121. The resistive heating line is coupled to the power supply 14 by a lead 13 or an electrically conductive medium. After receiving electric power supplied by the power supply 14, the resistive heating line heats up. Heat energy generated through heating-up is transferred to the aerosol formation product 20 by the base body 121. In some embodiments, the electrical heating element 122 may be an infrared electrothermal coating formed on the base body 121. The infrared electrothermal coating is coupled to the power supply 14 by a lead 13 or an electrically conductive medium. After receiving electric power supplied by the power supply 14, the infrared electrothermal coating heats up to generate infrared rays. The infrared rays heat the aerosol formation product 20 by passing through the base body 121 that can transmit the infrared rays or through direct radiation.

The color detection apparatus 16 is arranged on a base 17 above the cavity, and includes a light source and a color sensor (not shown in the figure). The base 17 is provided with a through hole in communication with the cavity such that the aerosol formation product 20 can favorably enter the cavity 11 through the through hole of the base 17. In some embodiments, the base 17 is fixed in the housing, and is further configured to fix the tubular base body 121.

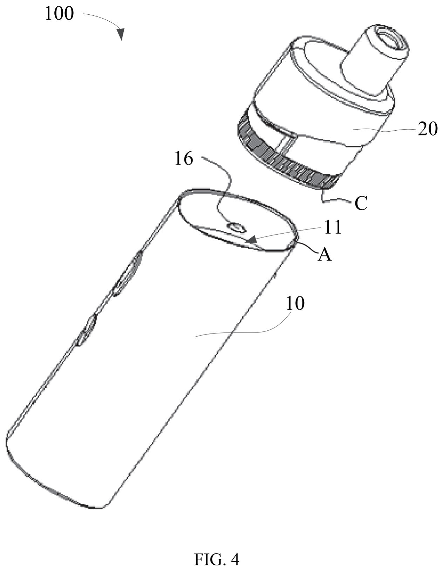

In some embodiments, the aerosol generation product 20 includes an atomizer. A liquid storage bin and an aerosol formation substrate in a liquid state arranged in the liquid storage bin are arranged in the atomizer. In some embodiments, a heating element is further arranged in the atomizer, and is configured to heat and atomize the aerosol formation substrate in a liquid state. In some embodiments, no heating element is arranged in the atomizer. The atomizer only has a liquid storage function, and is configured to cooperate with an external heating element to heat and atomize the aerosol formation substrate in a liquid state in the atomizer. In the above embodiments of the atomizer, as shown in FIG. 4, an outer surface of a housing of the atomizer has a label C. A color of the label C is different from a color of another portion of the outer surface of the housing of the atomizer such that detection and recognition by the color detection apparatus 16 can be facilitated. In some embodiments, an ultrasonic atomization element may be arranged in the atomizer, and is configured to ultrasonically atomize the aerosol formation substrate in a liquid state.

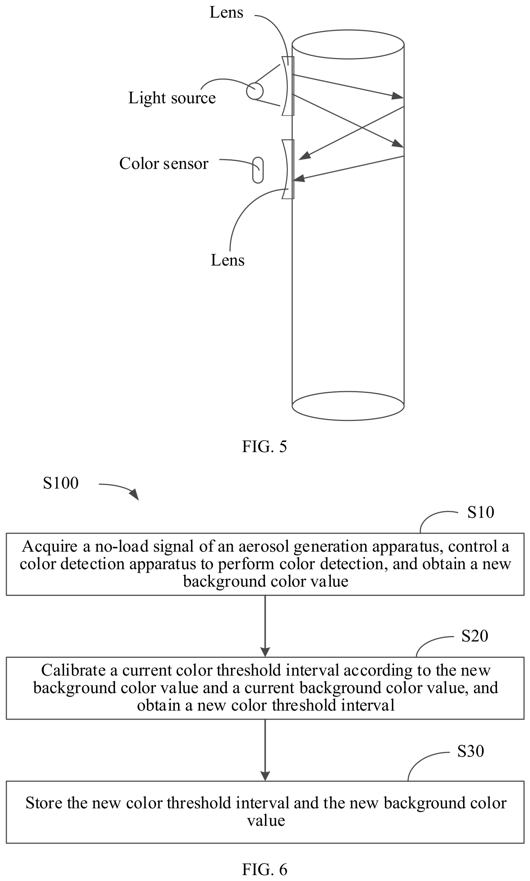

When the aerosol generation product 20 is completely inserted into the cavity 11, a position at which the color sensor is arranged corresponds to the label C of the aerosol generation product 20. A light source is configured to emit light into the cavity 11 of the aerosol generation apparatus 10. The color sensor is configured to detect reflection of the light, so as to obtain a color value. It can be understood that the color value denotes a color. For example, the color value may be a red, green, and blue (RGB) value. The light source and the color sensor each include a lens. As shown in FIG. 5, after passing through the lens of the light source, light emitted by the light source irradiates a surface of an inner wall of the cavity or an outer surface of an object inserted into the cavity. After being reflected, the light passes through the lens of the color sensor, to be received. A color value is obtained through detection.

In some embodiments, the light source may be a light-emitting diode (LED) lamp. The color sensor may include a color filter and a photoelectric detector. A color in reflection of light is detected by using the color filter and the photoelectric detector, and a corresponding color value is generated. The photoelectric detector includes but is not limited to a photodiode, a photoresistance, a phototransistor, etc. It should be noted that the structure of the color sensor is not limited to this case. The light source and the color sensor may be arranged separately or integrally.

In some embodiments, the aerosol generation apparatus 10 further includes an upper cover and a Hall sensor (not shown in the figure). The upper cover is configured to optionally block an opening A of the aerosol generation apparatus 10. In some embodiments, the upper cover is arranged on the housing, and can slide relative to the housing. Through this slide setting, the opening A can be opened or closed. In some embodiments, the upper cover is detachably connected to the housing by using a buckle, a thread, etc. The upper cover is opened when the aerosol generation apparatus is used.

A magnet is arranged in the upper cover. It can be understood that when the upper cover is closed, the magnet does not correspond to the cavity 11 and can correspond to a space beside the cavity 11. The Hall sensor is arranged in the housing. When the upper cover is closed, the magnet corresponds to the Hall sensor. A magnetic field and a change thereof can be detected based on the Hall sensor such that the Hall sensor can detect an opened/closed situation of the upper cover.

The power supply 14 supplies electric power for operating the aerosol generation apparatus 10. For example, the power supply 14 may supply electric power to the heater 12. The heater 12 heats up after receiving the electric power, so as to generate heating energy. The power supply 14 may supply electric power to the color detection apparatus 16. The color detection apparatus 16 performs color detection after receiving the electric power. In addition, the power supply 14 may supply electric power for operating another element provided in the aerosol generation apparatus 10. The power supply 14 may be a rechargeable battery or a disposable battery. The power supply 14 may be but is not limited to a lithium iron phosphate (LiFePO4) battery. For example, the power supply 14 may be a lithium cobalt oxide (LiCo02) battery or a lithium titanium oxide battery.

The control circuit 15 includes a controller, which can control an overall operation by the aerosol generation apparatus 10. For example, the control circuit 15 not only controls an operation by the power supply 14, an operation by the heater 12, an operation by the Hall sensor, and an operation by the color detection apparatus 16, but also controls an operation by another element of the aerosol generation apparatus 10. In addition, the control circuit 15 can determine, by checking a state of each element of the aerosol generation apparatus 10, whether the aerosol generation apparatus 10 can perform an operation. For example, when detecting that the upper cover is opened, the Hall sensor transmits a signal to the controller. The controller controls the aerosol generation apparatus 10 to be electrified to enter a standby state.

Considering that in the color detection apparatus, a lens of a light source for emitting light and a lens of a color sensor for receiving reflected light are prone to be smudged or aged, causing an color detection error, in some embodiments of the present application, the controller circuit 15 acquires the color value of the inner wall of the cavity obtained through detection by the color detection apparatus 16, and calibrates, according to the color value of the inner wall of the cavity, a stored reference value for determining a color, so as to improve accuracy of the color detection. In some embodiments, the control circuit 15 includes a memory for storing a program instruction corresponding to a calibration method for color detection in any one of the following method embodiments, so as to implement the calibration method for color detection in any one of the following method embodiments. The control circuit can calibrate, based on a smudge and/or aging of the lens of the color detection apparatus, the reference value for determining a color such that the color detection can be more accurate.

The calibration method for color detection provided in some embodiments of the present application is described below in combination with exemplary application and implementation of the aerosol generation apparatus provided in the embodiments of the present application. With reference to FIG. 6, a schematic flowchart of a calibration method for color detection according to some embodiments of the present application is shown in FIG. 6. It can be understood that an execution body of the control method may be one or more controllers in a control circuit.

As shown in FIG. 6, S100 of the method may specifically include the following steps.

S10: A no-load signal of the aerosol generation apparatus is acquired, the color detection apparatus is controlled to perform the color detection, and a new background color value is obtained.

The no-load signal is configured for indicating that no aerosol formation product is inserted into the cavity of the aerosol generation apparatus. For example, after using an aerosol formation product, a user moves the aerosol formation product out of the cavity, such that a no-load signal is generated. In some embodiments, a no-load situation may be monitored by using a pressure sensor, such that an no-load signal is generated. In some embodiments, a no-load signal may be generated based on a color detection apparatus. Specifically, if the color detection apparatus sequentially detects the label color and the color of the inner wall of the cavity within a time period, it can be determined that the aerosol formation product is pulled out, and an no-load signal is generated. After acquiring the no-load signal, the controller controls the color detection apparatus to perform the color detection, such that a new background color value is obtained.

Since the new background color value is obtained through detection when the aerosol generation apparatus is in an no-load state, the new background color value reflects the color of the inner wall of the cavity. It can be understood that an initial background color value is stored when the aerosol generation apparatus leaves a factory. After the aerosol generation apparatus is used one or more times, the color apparatus is controlled to perform the color detection, and a new background color value is obtained through the detection. Theoretically, a new background color value obtained through detection after i-th usage is the same as the initial background color value. However, as the aerosol generation apparatus is used, the lens of the light source and the lens of the color sensor in the color detection apparatus are prone to be smudged. For example, an oil stain or a residue is generated when the aerosol formation substrate is baked, or the lens is aged and turns yellow. Due to these smudges or aging, brightness or saturation of emitted light or reflected light can be reduced, causing a color detection error. Thus, the new background color value obtained through detection after i-th usage greatly changes relative to the initial background color value.

S20: A current color threshold interval is calibrated according to the new background color value and a current background color value, and a new color threshold interval is obtained.

The current background color value is a background color value before calibration, for example, may be a background color value of a color of the inner wall of the cavity obtained through detection after i-th usage. The new background color value is a background color value after calibration, for example, may be a background color value of a color of the inner wall of the cavity obtained through detection after j-th usage, where i < j.

Theoretically, the new background color value obtained through detection after j-th usage is the same as the current background color value obtained through detection after i-th usage. However, as the aerosol generation apparatus is used, the lens of the light source and the lens of the color sensor in the color detection apparatus are prone to be smudged. For example, an oil stain or a residue is generated when the aerosol formation substrate is baked, or the lens is aged and turns yellow. Due to a tiny smudge or fine aging generated during usage, brightness or saturation of emitted light or reflected light can be reduced, causing a color detection error. Thus, the new background color value obtained through detection after j-th usage changes relative to the current background color value obtained through detection after i-th usage.

It can be understood that a difference between the new background color value and the current background color value reflects a detection deviation of the color detection apparatus. Thus, a current color threshold interval is calibrated according to the new background color value and a current background color value, and a new color threshold interval is obtained.

The current color threshold interval is a color threshold interval obtained through calibration last time, for example, may be a color threshold interval obtained through calibration after i-th usage. The new color threshold interval is a color threshold interval obtained through calibration after this usage, for example, may be a color threshold interval obtained through calibration after j-th usage.

It can be understood that an initial color threshold interval is stored when the aerosol generation apparatus leaves a factory. It can be understood that the same color has different hue, saturation, and brightness. Thus, a color value corresponding to each color falls within an interval range. In some embodiments, the initial color threshold interval may be a difference threshold interval obtained by correspondingly subtracting an initial background color value from a color value interval range corresponding to a color.

In some embodiments, these initial color threshold intervals include difference threshold intervals corresponding to a plurality of colors, for example, a difference threshold interval corresponding to a color (such as a white color or a gray color) of the inner wall of the cavity, a body color (such as a browned color or a yellow color) of one or more aerosol formation products, or each (such as a red label color, a blue label color, or a green label color) of a plurality of label colors.

It can be understood that after the aerosol generation apparatus is used more or more times, the current color threshold interval is calibrated, and a new color threshold interval is obtained. For j-th usage, a current color threshold interval may be a color threshold interval obtained through calibration after i-th usage.

When color detection is performed, a new background color value C0 is subtracted from a color value C1 obtained through detection. If a difference falls within a new color threshold interval D, a detected color is a color corresponding to the new color threshold interval D.

It can be known that after calibration, a new color threshold interval and a new background color value that are obtained are reference values for determining a color. In some embodiments, j may be i+1. In the embodiment, a reference value for determining a color is calibrated once each time the aerosol generation apparatus is used. In some embodiments, j = i + k, where k is a positive integer greater than 1. In the embodiment, a reference value for determining a color is calibrated once every k times of usage. In some embodiments, an interval time t may be set (for example, t may be 48 h or 72 h). After i-th usage, the aerosol generation apparatus is used again after the interval time t, that is, used for j-th time. In the embodiment, the reference value for determining a color is calibrated once every interval time t. It can be understood that a person skilled in the art can set, according to an actual situation, calibration frequency of the reference value for determining a color.

In some embodiments, the current background color value is hue, saturation, and value (HSV) data in an HSV color model. The HSV data includes a hue value H, a saturation value S, and a lightness value V.

The hue value H refers to a wave length of an object transmitted or reflected, and is identified by a color such as a red color or a green color. The hue value H is measured by an angle ranging from 0° to 360°. Computed from a red color in an anticlockwise direction, a hue value of the red color is 0°, a hue value of a green color is 120°, and a hue value of a blue color is 240°. The saturation value S, also referred to as chrominance, refers to intensity or purity of a color. Saturation denotes a ratio of a gray color to a hue, and is measured from 0% (denoting a gray color) to 100% (denoting full saturation). The lightness value V refers to relative lightness of a color, and is generally measured by a percentage from 0% (denoting a black color) to 100% (denoting a white color).

In the HSV color model, HSV value ranges corresponding to colors are apparently different from each other, which is beneficial to accuracy of color detection.

In the embodiment, before step S20, the method further includes: the new background color value is converted into HSV data in an HSV color model.

In some embodiments, an RGB value is generally taken as the new background color value obtained through detection. Thus, the new background color value is converted into HSV data in an HSV color model, which is beneficial to subsequent computation. It can be understood that converting a value in another color model into HSV data in an HSV color model belongs to the prior art, and details are not described herein.

In some embodiments, step S20 mentioned above specifically includes:
S21: A deviation between the new background color value and the current background color value is determined; and
S22: The current color threshold interval is adjusted according to the deviation, and the new color threshold interval is obtained.

A detection deviation of the color detection apparatus is reflected based on a difference between the new background color value and the current background color value. In the embodiment, a detection deviation of the color detection apparatus is evaluated by using a deviation Δ between a new background color value HSVⱼ and a current background color value HSVᵢ.

The current color threshold interval is adjusted according to the deviation Δ, and a new color threshold interval is obtained such that the new color threshold interval can make up for a detection deviation of the color detection apparatus. Thus, the color detection can be more accurate if the new color threshold interval is taken as a reference value for determining a color.

In some embodiments, step S22 mentioned above specifically includes:
S221: An expansion is performed on the current color threshold interval according to the deviation, and the new color threshold interval is obtained.

The expansion means that a range of a current color threshold interval Dᵢ is expanded. That is, a distance between an upper limit max and a lower limit min of the current color threshold interval Dᵢ is increased.

In the embodiment, the distance between the upper limit max and the lower limit min of the current color threshold interval Dᵢ is increased based on the deviation, and the new color threshold interval is obtained, such that a color range covered by the new color threshold interval is larger. Accordingly, even if a color value obtained through detection by the color detection apparatus has an error, by taking the new color threshold interval having a large color range as a reference value for determining a color, the color value obtained through detection and having an error can still fall within a corresponding new color threshold interval. Thus, a correct color can still be detected such that the color detection can be more accurate.

In some embodiments, step S221 mentioned above specifically includes:
An absolute value of the deviation is multiplied by a predetermined first coefficient, the product is added to an upper limit of the current color threshold interval, and the new color threshold interval is obtained; and/or
a product of an absolute value of the deviation and a predetermined second coefficient is subtracted from a lower limit of the current color threshold interval, and the new color threshold interval is obtained.

In some embodiments, the current color threshold interval Dᵢ is [min, max]. A product |Δ|*α₁ is obtained by multiplying an absolute value |Δ| of the deviation by a first coefficient α₁. The product |Δ|*α₁ is added to the upper limit max of the current color threshold interval. A new color threshold interval Dⱼ is obtained as [min, max+|Δ|*α₁].

The first coefficient α₁ is an empirical value greater than or equal to 1. Thus, an expansion amplitude of the current color threshold interval is greater than the absolute value |Δ| of the deviation such that a color range covered by the new color threshold interval Dⱼ can be enlarged.

In the embodiment, by increasing the upper limit of the current color threshold interval Dᵢ, the expansion can be effectively implemented. The obtained new color threshold interval can cover a larger color range. Thus, a color value obtained through detection and having an error can still fall within a corresponding new color threshold interval. That is, a correct color can still be detected, and the color detection can be more accurate.

In some embodiments, a product |Δ|*α₂ of an absolute value of a deviation and a second coefficient is subtracted from a lower limit min of a current color threshold interval Dᵢ[min, max]. A new color interval Dⱼ is obtained as [min-|Δ|*α₂, max].

The second coefficient α₂ is an empirical value greater than or equal to 1. Thus, an expansion amplitude of the current color threshold interval is greater than the absolute value |Δ| of the deviation such that a color range covered by the new color threshold interval Dⱼ can be enlarged.

In the embodiment, by decreasing the lower limit of the current color threshold interval Dᵢ, the expansion can be effectively implemented. The obtained new color threshold interval can cover a larger color range. Thus, a color value obtained through detection and having an error can still fall within a corresponding new color threshold interval. That is, a correct color can still be detected, and the color detection can be more accurate.

In some embodiments, an upper limit of a current color threshold interval Dᵢ is increased, and a lower limit of the current color threshold interval Dᵢ is decreased, such that a new color interval Dⱼ is obtained as [min-|Δ|*α₂, max+|Δ|*α₁]. The expansion can be effectively implemented. A color value obtained through detection and having an error can still be more likely to fall within a corresponding new color threshold interval. That is, a correct color can still be detected, and the color detection can be more accurate.

In some embodiments, step S221 mentioned above specifically includes: an absolute value of the deviation is multiplied by a predetermined first coefficient, the product is added to an upper limit of the current color threshold interval, the absolute value of the deviation is multiplied by a predetermined third coefficient, the product is added to a lower limit of the current color threshold interval, and the new color threshold interval is obtained, where the third coefficient is less than the first coefficient.

In some embodiments, the current color threshold interval Dᵢ is [min, max]. A product |Δ|*α₁ is obtained by multiplying an absolute value |Δ| of the deviation by a first coefficient α₁. The product |Δ|*α₁ is added to the upper limit max of the current color threshold interval. In addition, a product |Δ|*α₃ is obtained by multiplying an absolute value |Δ| of the deviation by a third coefficient α₃. The product |Δ|*α₃ is added to the lower limit min of the current color threshold interval. A new color threshold interval Dⱼ is obtained as [min+|Δ|*α₃, max+|Δ|*α₁].

The third coefficient α₃ is less than the empirical value of the first coefficient α₁, and can be specifically set according to an actual situation.

Since the third coefficient α₃ is less than the first coefficient α₁, an increased amplitude of the lower limit min is less than an increased amplitude of the upper limit max. Thus, the entire new color threshold interval Dⱼ is expanded. Thus, a color value obtained through detection and having an error can still fall within a corresponding new color threshold interval. That is, a correct color can still be detected, and the color detection can be more accurate.

In some embodiments, step S22 mentioned above specifically includes:
S222: A movement is performed on the current color threshold interval according to the deviation, and the new color threshold interval is obtained.

The movement means that in a case that an interval range is not changed, an upper limit and a lower limit of a current color threshold interval are processed by using the same variable, such that a slide movement is implemented.

In the embodiment, based on the deviation, an upper limit and a lower limit of the current color threshold interval are moved by the same variable, and a movement direction is the same as a positive/negative direction of the deviation. For example, a deviation is negative (a new background color value HSVⱼ is less than a current background color value HSVⱼ), and the current color threshold interval is moved in a decreasing direction of the upper limit or the lower limit. Thus, when a color range covered by the new color threshold interval is not changed, a color value obtained through detection and having an error can still fall within a corresponding new color threshold interval. That is, a correct color can still be detected, and the color detection can be more accurate.

In some embodiments, step S222 mentioned above specifically includes: a product of an absolute value of the deviation and a predetermined fourth coefficient is subtracted from an upper limit of the current color threshold interval, a product of the absolute value of the deviation and the fourth coefficient is subtracted from a lower limit of the current color threshold interval, and the new color threshold interval is obtained.

It can be understood that the lens of the light source and the lens of the color sensor in the color detection apparatus are prone to be smudged. For example, an oil stain or a residue is generated when the aerosol formation substrate is baked, or the lens is aged and turns yellow. Due to these smudges or aging, brightness or saturation of emitted light or reflected light can be reduced, that is, brightness or saturation of a color value obtained through detection is small. In the embodiment, the current color threshold interval is moved in a decreasing direction of the upper limit or the lower limit, so as to be adapted to make up for a detection error.

Specifically, a product |Δ|*α₄ of an absolute value of a deviation and a fourth coefficient is subtracted from an upper limit max of a current color threshold interval Dᵢ [min, max]. A product |Δ|*α₄ of an absolute value of a deviation and a fourth coefficient is subtracted from a lower limit min. Then, [min-|Δ|*α₄, max-|Δ|*α₄] is obtained.

The fourth coefficient α₄ is an empirical value greater than or equal to 1, such that the current color threshold interval is moved in a decreasing direction of the upper limit or the lower limit.

In the embodiment, the current color threshold interval is moved in a decreasing direction of the upper limit or the lower limit such that the obtained new color threshold interval can be adapted to make up for the detection error, and the color detection can be more accurate.

S30: The new color threshold interval and the new background color value are stored.

After being obtained, the new color threshold interval and the new background color value are stored, so as to be taken as reference values for determining a color when the color detection is performed next time. Thus, as the aerosol generation apparatus is used, the current background color value and the current color threshold interval can be calibrated such that the color detection can be more accurate.

In the embodiment, as an aerosol generation apparatus is used, a current background color value and a current color threshold interval are recalibrated, a new color threshold interval and a new background color value that are obtained through calibration are taken as reference values for determining a color such that the reference values can be adapted to a smudge of a color detection apparatus. Fine errors caused by a tiny smudge and brightness decay, etc. can be corrected in time, the color detection can be more accurate, and the smudge can be effectively prevented.

In some embodiments, S100 of the method further includes:
S40: In a case that an absolute value of the deviation is greater than or equal to a first threshold, a reminding signal for cleaning a lens of the color detection apparatus is given.

The first threshold is a threshold that affects detection work after the lens of the color detection apparatus is smudged or aged. Based on that a smudged or aged degree is inversely correlated to accuracy of color detection, it can be understood that the first threshold can reflect the smudged or aged degree. If the absolute value of the deviation is greater than or equal to the first threshold, it indicates that a smudge or aging is severe, and a reminding signal is given to remind a user of cleaning the lens of the color detection apparatus. In some embodiments, the user may be reminded, by using a vibration, lamp light, or a sound, etc., of cleaning the lens of the color detection apparatus.

It can be understood that in some embodiments, if the absolute value of the deviation is greater than or equal to the first threshold, a reminding signal for cleaning the cavity may be given. In some embodiments, the user may be reminded, by using vibrations in different modes, different lamp light, different sounds, etc., of cleaning the cavity.

In the embodiment, by comparing the absolute value of the deviation with the first threshold, the smudged or aged degree of the lens of the color detection apparatus is monitored. Thus, a user can be reminded in time of cleaning the lens, so as to improve accuracy of the color detection.

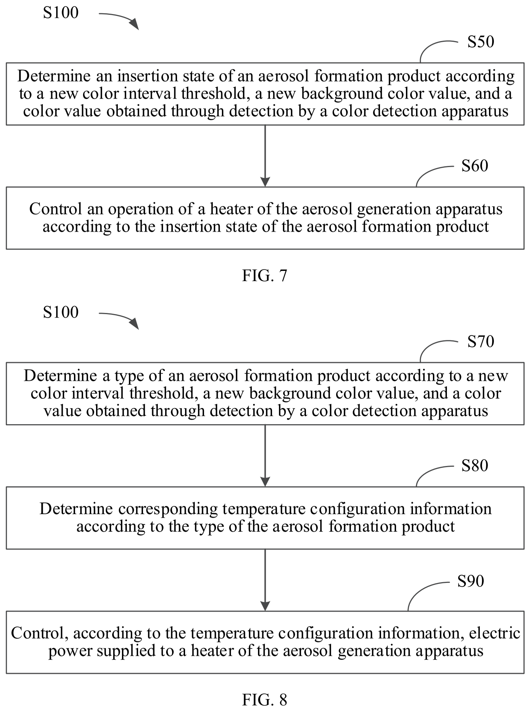

In some embodiments, with reference to FIG. 7, S100 of the method further includes:
S50: An insertion state of an aerosol formation product is determined according to the new color interval threshold, the new background color value, and a color value obtained through detection by the color detection apparatus; and
S60: An operation of a heater of the aerosol generation apparatus is controlled according to the insertion state of the aerosol formation product.

The new color interval threshold and the new background color value are taken as reference values for determining a color to which a color value obtained through detection belongs. It can be understood that based on that the body color is different from the label color of the aerosol formation product, the insertion state of the aerosol formation product can be determined according to the color detected by the color detection apparatus. In some embodiments, the insertion state includes a state of being inserted in place and a state of not being inserted in place. The state of being inserted in place means that the aerosol formation product is rightly accommodated in the cavity. Generally, in the state of being inserted in place, an end of the aerosol formation product abuts against a bottom of the cavity, and the color detection apparatus corresponds to the label.

Then, an operation of a heater of the aerosol generation apparatus is controlled according to the insertion state of the aerosol formation product. For example, when the aerosol formation product is inserted in place, the heater is controlled to heat the aerosol formation product such that an aerosol can be generated. When the aerosol formation product is not inserted in place, the heater is controlled to not perform heating or to stop performing heating such that a potential safety hazard can be avoided.

In the embodiment, the new color interval threshold and the new background color value are taken as reference values for determining a color to which a color value obtained through detection belongs such that the color detection apparatus can accurately detect the color. Then, based on a color detection result, the heater is controlled to operate, such that intelligent control is achieved. A manual operation by a user can be effectively reduced.

In some embodiments, step S50 mentioned above specifically includes: in a case that a difference between the color value obtained through detection by the color detection apparatus and the new background color value falls within a new color interval threshold corresponding to a label color, it is determined that the aerosol formation product is inserted in place, where the label color is a color of a label provided on the aerosol formation product. In the embodiment, step S60 mentioned above specifically includes: in a case that the aerosol formation product is inserted in place, the heater is controlled to perform heating.

It can be understood that a plurality of initial color threshold intervals are stored when the aerosol generation apparatus leaves a factory. These initial color threshold intervals include difference threshold intervals corresponding to a plurality of colors, for example, a difference threshold interval corresponding to a color (such as a white color or a gray color) of the inner wall of the cavity, a body color (such as a browned color or a yellow color) of one or more aerosol formation products, or each (such as a red label color, a blue label color, or a green label color) of a plurality of label colors. Each time the aerosol generation apparatus is used, these initial color threshold intervals are calibrated once, such that new color interval thresholds are generated. Thus, each label color corresponds to a new color interval threshold.

If a difference between the color value obtained through detection by the color detection apparatus and the new background color value falls within a new color interval threshold corresponding to a label color, it indicates that the color detection apparatus detects the label. The color detection apparatus corresponds to the label. An end of the aerosol formation product abuts against the bottom of the cavity. Thus, it can be determined that the aerosol formation product is inserted in place. In a case that the aerosol formation product is inserted in place, the heater is controlled to perform heating.

In the embodiment, through the above method, when the color detection apparatus accurately detects a label, the heater is controlled to operate, such that intelligent control is implemented. A manual operation by a user can be effectively reduced.

In some embodiments, step S50 mentioned above specifically includes: in a case that a difference between the color value obtained through detection by the color detection apparatus and the new background color value falls within a new color interval threshold corresponding to a body color, it is determined that the aerosol formation product is not inserted in place, where the body color is a color of a body of the aerosol formation product. In the embodiment, step S60 mentioned above specifically includes: in a case that the aerosol formation product is not inserted in place, the heater is controlled to stop performing heating.

It can be understood that each of a plurality of body colors stored in the aerosol generation apparatus corresponds to a new color interval threshold.

If a difference between the color value obtained through detection by the color detection apparatus and the new background color value falls within a new color interval threshold corresponding to a body color, it indicates that the color detection apparatus detects the body, rather than the label, of the aerosol generation product. Thus, it can be determined that the aerosol formation product is not inserted in place. In a case that the aerosol formation product is not inserted in place, the heater is controlled to stop performing heating.

In the embodiment, through the above method, when the color detection apparatus accurately detects the body of the aerosol formation product, the heater is controlled to stop performing heating, such that intelligent control is implemented. A manual operation by a user can be effectively reduced.

In some embodiments, with reference to FIG. 8, S100 of the method further includes:
S70: A type of an aerosol formation product is determined according to the new color interval threshold, the new background color value, and a color value obtained through detection by the color detection apparatus.

It can be understood that a corresponding relationship between a label color and a type is stored when the aerosol generation apparatus leaves a factory. Aerosol formation products based on different types have different label colors. Thus, a type of an aerosol formation product can be determined according to a label color detected by the color detection apparatus.

Specifically, the new color interval threshold and the new background color value are taken as reference values for determining a color to which a color value obtained through detection belongs such that a detected color can be determined. If the color is a label color, a type corresponding to the label color can be further determined.

In some embodiments, step S70 mentioned above specifically includes: in a case that a difference between the color value obtained through detection by the color detection apparatus and the new background color value falls within a new color interval threshold corresponding to a target label color, it is determined that the type of the aerosol formation product is a type corresponding to the target label color.

The target label color is any label color stored in the aerosol generation apparatus. If a difference between the color value obtained through detection by the color detection apparatus and the new background color value falls within a new color interval threshold corresponding to a target label color, it indicates that the color detection apparatus detects an aerosol formation product having a label having the target label color. A corresponding relationship between a label color and a type is stored in the aerosol generation apparatus. Thus, the type of the aerosol formation product can be determined as the type corresponding to the target label color.

S80: Corresponding temperature configuration information is determined according to the type of the aerosol formation product.

A corresponding relationship between a type of an aerosol formation product and temperature configuration information is prestored in the aerosol generation apparatus. The temperature configuration information may be a heating curve. After the type of the aerosol formation product is acquired, corresponding temperature configuration information can be selected from a plurality of pieces of prestored temperature configuration information.

S90: According to the temperature configuration information, electric power supplied to a heater of the aerosol generation apparatus is controlled.

Finally, the electric power supplied to the heater of the aerosol generation apparatus is controlled according to the temperature configuration information such that a temperature provided by the heater conforms to a set temperature in the temperature configuration information. Thus, the aerosol formation product can be baked according to the matching temperature configuration information, and a user can obtain an excellent flavor.

In the embodiment, the new color interval threshold and the new background color value are taken as reference values for determining a color to which a color value obtained through detection belongs such that the color detection apparatus can accurately detect a label color. The temperature configuration information is determined based on the label color. A temperature provided by the heater is controlled to conform to a set temperature in the temperature configuration information. Thus, the aerosol formation product can be baked according to the matching temperature configuration information, and a user can obtain an excellent flavor.

It should be noted that the apparatus embodiments described above are merely illustrative. The units described as separate components may be physically separated or not, and the components displayed as units may be physical units or not, that is, may be located in one position, or may be distributed on a plurality of network units. Some or all of the modules may be selected according to actual requirements to achieve the objective of the solution of the embodiment.

Through the descriptions of the above implementations, a person of ordinary skill in the art can clearly understand that each implementation may be implemented by software in combination with a universal hardware platform, certainly, may be implemented by hardware. A person of ordinary skill in the art can understand that all or some of the flows of the method in the above embodiments may be implemented by a computer program instructing related hardware. The program may be stored in a computer-readable storage medium. The program, when executed, may include the flows of the above embodiments of the method. The storage medium may be a magnetic disk, an optical disc, a read-only memory (ROM), a random access memory (RAM), etc.

Finally, it should be noted that the above embodiments are only used for describing the technical solutions of the present application, but do not limit the present application. According to the idea of the present application, the technical features in the above embodiments or different embodiments may be combined, and the steps may be performed in any sequence. Moreover, plenty of other changes of different aspects of the present application exist as described above, and these changes are not provided in detail for simplicity. Although the present application is described in detail with reference to the above embodiments, a person of ordinary skill in the art should understand that amendments can still be made to the technical solutions recited in the above embodiment, or equivalent substitutions can be made to some technical features in the technical solutions. These amendments or substitutions do not cause the essence of corresponding technical solutions to depart from the scope of the technical solutions of the embodiments of the present application.

## Claims

1. A calibration method for color detection, applied to an aerosol generation apparatus comprising a color detection apparatus, comprising:
acquiring a no-load signal of the aerosol generation apparatus, controlling the color detection apparatus to perform the color detection, and obtaining a new background color value;
calibrating a current color threshold interval according to the new background color value and a current background color value, and obtaining a new color threshold interval; and
storing the new color threshold interval and the new background color value.

2. The method according to claim 1, wherein said calibrating a current color threshold interval according to the new background color value and a current background color value, and obtaining a new color threshold interval comprise:
determining a deviation between the new background color value and the current background color value; and
adjusting the current color threshold interval according to the deviation, and obtaining the new color threshold interval.

3. The method according to claim 2, wherein said adjusting the current color threshold interval according to the deviation, and obtaining the new color threshold interval comprise:
performing an expansion on the current color threshold interval according to the deviation, and obtaining the new color threshold interval.

4. The method according to claim 3, wherein said performing an expansion on the current color threshold interval according to the deviation, and obtaining the new color threshold interval comprise:
multiplying an absolute value of the deviation by a predetermined first coefficient, adding the product to an upper limit of the current color threshold interval, and obtaining the new color threshold interval; and/or
subtracting a product of an absolute value of the deviation and a predetermined second coefficient from a lower limit of the current color threshold interval, and obtaining the new color threshold interval.

5. The method according to claim 3, wherein said performing an expansion on the current color threshold interval according to the deviation, and obtaining the new color threshold interval comprise:
multiplying an absolute value of the deviation by a predetermined first coefficient, adding the product to an upper limit of the current color threshold interval,
multiplying the absolute value of the deviation by a predetermined third coefficient, adding the product to a lower limit of the current color threshold interval, and obtaining the new color threshold interval, wherein the third coefficient is less than the first coefficient.

6. The method according to claim 2, wherein said adjusting the current color threshold interval according to the deviation, and obtaining the new color threshold interval comprise:
performing a movement on the current color threshold interval according to the deviation, and obtaining the new color threshold interval.

7. The method according to claim 6, wherein said performing a movement on the current color threshold interval according to the deviation, and obtaining the new color threshold interval comprise:
subtracting a product of an absolute value of the deviation and a predetermined fourth coefficient from an upper limit of the current color threshold interval, subtracting a product of the absolute value of the deviation and the fourth coefficient from a lower limit of the current color threshold interval, and obtaining the new color threshold interval.

8. The method according to claim 2, further comprising:
giving, in a case that an absolute value of the deviation is greater than or equal to a first threshold, a reminding signal for cleaning a lens of the color detection apparatus.

9. The method according to claim 1, wherein the current background color value is hue, saturation, and value, HSV, data in an HSV color model, and
before said calibrating a current color threshold interval according to the new background color value and a current background color value, and obtaining a new color threshold interval, the method further comprises:
converting the new background color value into HSV data in the HSV color model.

10. The method according to any one of claims 1 to 9, further comprising:
determining an insertion state of the aerosol formation product according to the new color interval threshold, the new background color value, and a color value obtained through detection by the color detection apparatus; and
controlling an operation of a heater of the aerosol generation apparatus according to the insertion state of the aerosol formation product.

11. The method according to claim 10, wherein said determining an insertion state of an aerosol formation product according to the new color interval threshold, the new background color value, and a color value obtained through detection by the color detection apparatus comprises:
determining, in a case that a difference between the color value obtained through detection by the color detection apparatus and the new background color value falls within a new color interval threshold corresponding to a label color, that the aerosol formation product is inserted in place, wherein the label color is a color of a label provided on the aerosol formation product; and
said controlling an operation of a heater of the aerosol generation apparatus according to the insertion state of the aerosol formation product comprises:
controlling, in a case that the aerosol formation product is inserted in place, the heater to perform heating.

12. The method according to claim 10, wherein said determining an insertion state of an aerosol formation product according to the new color interval threshold, the new background color value, and a color value obtained through detection by the color detection apparatus comprises:
determining, in a case that a difference between the color value obtained through detection by the color detection apparatus and the new background color value falls within a new color interval threshold corresponding to a body color, that the aerosol formation product is not inserted in place, wherein the body color is a color of a body of the aerosol formation product; and
said controlling an operation of a heater of the aerosol generation apparatus according to the insertion state of the aerosol formation product comprises:
controlling, in a case that the aerosol formation product is not inserted in place, the heater to stop performing heating.

13. The method according to any one of claims 1 to 9, further comprising:
determining a type of an aerosol formation product according to the new color interval threshold, the new background color value, and a color value obtained through detection by the color detection apparatus;
determining corresponding temperature configuration information according to the type of the aerosol formation product; and
controlling, according to the temperature configuration information, electric power supplied to a heater of the aerosol generation apparatus.

14. The method according to claim 13, wherein said determining a type of an aerosol formation product according to the new color interval threshold, the new background color value, and a color value obtained through detection by the color detection apparatus comprises:
determining, in a case that a difference between the color value obtained through detection by the color detection apparatus and the new background color value falls within a new color interval threshold corresponding to a target label color, that the type of the aerosol formation product is a type corresponding to the target label color.

15. An aerosol generation apparatus, comprising:
a housing provided with an opening;
a cavity structured to receive or remove an aerosol formation product through the opening;
a heater configured to heat at least a portion of the aerosol formation product received in the cavity, so as to generate an aerosol;
a color detection apparatus configured to emit light into the cavity and detect reflection of the light, so as to obtain a color value through detection; and
a control circuit connected to the heater and the color detection apparatus and configured to perform the method according to any one of claims 1 to 14.
